# EUROPÄISCHE PATENTSCHRIFT

(11) **EP 2 839 748 B1**
(45) Veröffentlichungstag und Bekanntmachung des Hinweises auf die Patenterteilung: **02.01.2019**
(21) Anmeldenummer: 13180795.0
(22) Anmeldetag: 18.08.2013
(51) Int. Cl.: A23C 9/123, A23C 19/032

(54) **Quarkgrundmasse mit verbesserten Geschmackeigenschaften II**
Ground mass for curd cheese with improved taste properties II
Excipient de fromage blanc avec qualité de gout ameliorée II

(43) Veröffentlichungstag der Anmeldung: 25.02.2015
(73) Patentinhaber: DMK Deutsches Milchkontor GmbH, 27404 Zeven (DE)
(72) Erfinder: Schomacker, Marina, 27419 Sittensen (DE); Hahn, Michael, 27404 Heerlingen (DE)
(74) Vertreter: Fabry, Bernd

(56) Entgegenhaltungen:
- EP-A1- 1 593 309
- EP-A1- 1 752 046
- DE-A1- 2 323 107
- DE-T2- 60 129 217
- DE-T2- 69 219 130
- US-A1- 2005 208 630

## Beschreibung

### Gebiet der Erfindung

Die Erfindung befindet sich auf dem Gebiet der Milchprodukte und betrifft einen geschmacksverbesserten Quark sowie ein Verfahren zu seiner Herstellung.

### Stand der Technik

Zur Herstellung von Quark wird in der Regel entrahmte Milch einer Temperaturbehandlung unterworfen und die enthaltenen Proteine denaturiert.

Durch die anschließende Zugabe von Milchsäurebakterien und Lab erfolgt die so genannte Dicklegung (Phasenumkehrung) der Milch. Das Casein gerinnt und bildet die fachlich bezeichnete Gallerte aus. Nach der Reifung (8 bis 20 h) wird die Gallerte aufgerührt. Hierdurch wurde die Molkenabtrennung ausgelöst und im Separator werden dann die beiden Phasen getrennt. Die flüssige Sauermolke wird anderweitig verarbeitet und die Quarkgrundmasse durch Zugabe von Sahne auf den gewünschten Fett- und Proteingehalt eingestellt.

Diese Verfahren des Stands der Technik haben jedoch den Nachteil, dass die sensorische Beurteilung des Quarks von vielen Konsumenten als nicht zufriedenstellend beurteilt wird. Entweder ist das Produkt geschmacklich einwandfrei, weist aber eine rauhe Struktur auf, oder es ist vom haptischen Eindruck her zwar cremig, hinterlässt aber einen schleimigen Gesamteindruck.

Im Markt besteht des Weiteren ein starkes Bedürfnis nach verzehrfertigen Quarkzubereitungen, die eine frische Fruchtauflage - sei es in Form eines Pürees oder eines Salates mit stückigen Früchten - aufweisen. Solche Produkte müssen bislang jeweils vor dem Verzehr frisch zubereitet werden. Dabei besteht das Problem weniger darin, die fruchthaltigen Quarkzubereitungen in abgepacktem Zustand frisch zu halten und zu konservieren. Wesentlich problematischer ist, dass die Früchte Wasser ziehen und sich der Fruchtsaft durch das Produkt zieht, es verwässert und dadurch die Verzehreigenschaften negativ beeinflusst.

Die US 2005/208630 A1, DE 601 29 217 T2, EP 1 752 046 A1 und DE 23 23 107 A1 beschreiben Quarkgrundmassen, welche unter Einsatz von Starterkulturmischungen hergestellt wurden.

Die komplexe Aufgabe der vorliegenden Erfindung hat somit darin bestanden, eine Quarkmasse mit geschmacklich verbesserten Eigenschaften zur Verfügung zu stellen, die beim Verzehr gerade einen cremigen Eindruck hinterlässt, ohne dass das Produkt schleimig schmeckt. Des Weiteren sollte die Quarkmasse eine solche Beschaffenheit aufweisen, dass man sie mit einer frischen Fruchtzubereitung beaufschlagen kann, ohne dass der Fruchtsaft die Quarkmasse verwässert.

Die Erfindung ist definiert durch die angefügten Ansprüche.

Ein erster Gegenstand der Erfindung betrifft eine Quarkgrundmasse mit verbesserten Geschmackseigenschaften, die dadurch erhältlich ist, dass man
(a) Rohmilch einer Temperaturbehandlung unterwirft und den Rahm abtrennt, so dass eine ungesäuerte Quarkgrundmasse entsteht,
(b) die so erhaltene Mischung einer Temperaturbehandlung unterwirft, bis Denaturierung eintritt,
(c) das denaturierte Produkt mit Starterkulturen und Lab versetzt und gegebenenfalls
(d) die nach Abschluss der Fermentation erhaltene Quarkgrundmasse auf einen definierten Trockenmassen- und Proteingehalt einstellt,
und als Starterkultur
(i) eine erste Mischung von fünf Mikroorganismen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen umfassend (ii-1) *Streptococcus thermophilus,* (ii-2) *Lactococcus lactis subsp. lactis* und (ii-3) *Lactococcus lactis subsp. cremoris*
in den Mengenverhältnissen wie in Anspruch 1 definiert einsetzt.

Vorzugsweise weist die erfindungsgemäße Quarkgrundmasse bei 20 °C eine Viskosität nach Brookfield (RVT, Spindel 1, 10 Upm) im Bereich von etwa 1.000 bis etwa 8.000 mPas, vorzugsweise etwa 2.000 bis etwa 6.00 mPas und insbesondere etwa 3.000 bis etwa 5.000 mPas auf.

Ein zweiter Gegenstand der Erfindung betrifft eine verzehrfertige Quarkzubereitung, die die oben beschriebene Grundmasse sowie eine Auflage aus einer frischen Fruchtzubereitung enthält. Bei dieser Fruchtzubereitung kann es sich beispielsweise um ein Fruchtpüree oder Fruchtsalat handeln. Alternativ können auch zerkleinerte Nüsse, Schokoladenstückchen oder Saucen als so genannte "Toppings" eingesetzt werden.

Ein dritter Gegenstand der Erfindung ist auf ein Verfahren zur Herstellung einer Quarkgrundmasse mit verbesserten Geschmackseigenschaften gerichtet, bei dem man
(a) Rohmilch einer Temperaturbehandlung unterwirft und den Rahm abtrennt, so dass eine ungesäuerte Quarkgrundmasse entsteht,
(b) die so erhaltene Mischung einer Temperaturbehandlung unterwirft, bis Denaturierung eintritt,
(c) das denaturierte Produkt mit Starterkulturen und Lab versetzt und gegebenenfalls
(d) die nach Abschluss der Fermentation erhaltene Quarkgrundmasse auf einen definierten Trockenmassen- und Proteingehalt einstellt,
wobei man als Starterkultur
(i) eine erste Mischung von fünf Mikroorganismen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) eine zweite Mischung von drei Mikroorganismen umfassend (ii-1) *Streptococcus thermophilus,* (ii-2) *Lactococcus lactis subsp. lactis* und (ii-3) *Lactococcus lactis subsp. cremoris*
in den Mengenverhältnissen wie in Anspruch 5 definiert einsetzt.

Überraschenderweise wurde gefunden, dass unter Verwendung der ausgewählten Starterkulturen wie in den unabhängigen Ansprüchen definiert ein geschmacklich signifikant verbesserter Quark erhalten wird, der cremig schmeckt und keinen schleimigen Gesamteindruck hinterlässt. Unter Einsatz einer speziellen Rotor-Stator-Technik bei der Vermischung bzw. Nachbehandlung der Produkte, kann die Cremigkeit noch einmal signifikant verbessert werden. Außerdem wird durch diese Maßnahme eine Konsistenz erzeugt, die das Eindringen von Fruchtsaft aus einer Fruchtauflage zwar nicht völlig verhindert, jedoch erheblich verzögert. Auf diese Weise lassen sich nun erstmals auch verzehrfertige Quarkzubereitungen mit einer frischen Fruchtauflage in industriellem Maßstab herstellen. Auf diese Weise sind die Quarkgrundmasse, die verzehrfertige Quarkzubereitung und das zugehörige Herstellverfahren durch einen gemeinsamen erfinderischen Gedanken verbunden.

### Herstellung der ungesäuerten Quarkgrundmasse

Zur Herstellung der ungesäuerten Quarkgrundmassse erfolgt zunächst eine Abtrennung von Feststoffen sowie die Entrahmung des Fettanteils von etwa 4 Gew.-% aus der Rohmilch. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können.¹ Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

Die Wärmebehandlung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

### Denaturierung

Im folgenden Schritt wird die so erhaltene ungesäuerte Quarkgrundmasse einer thermischen Behandlung unterworfen. Die nun erfolgende Denaturierung kann in an sich bekannter Wei-¹(http://www.westfalia-separator.com/de/anwendungen/molkereitechnik/milch-molke.html).
se erfolgen, nämlich über einen Zeitraum von etwa 5 bis etwa 10 min und vorzugsweise etwa 6 min und Temperaturen von etwa 85 bis etwa 90 °C und insbesondere etwa 88 °C.

### Fermentation und Standardisierung

Auch die Fermentation des denaturierten Vorproduktes kann nach den bekannten Verfahren des Stands der Technik erfolgen. Dazu werden geeignete Starterkulturen und Lab zugesetzt.

Die Starterkulturen enthalten
- 25 bis 75 Gew.-% und vorzugsweise 40 bis 60 Gew.-% der ersten Mischung (i) und
- 75 bis 25 Gew.-% und vorzugsweise 60 bis 40 Gew.-% der zweiten Mischung (ii) mit der Maßgabe, dass sich die Mengenangaben zu 100 Gew.-% ergänzen, und dass in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind. Besonders bevorzugt sind Starterkulturen, die
- 40 bis 60 Gew.-% der Mischung (i) und
- 60 bis 40 Gew.-% der Mischung (ii) mit den obigen Maßgaben enthalten. Statt die beiden im Handel erhältlichen Zubereitungen (i) und (ii) gemeinsam einzusetzen, ist es natürlich grundsätzlich auch möglich, die fünf Mikroorganismen einzeln zu verwenden und dann so abzumischen, dass eine Starterkulturmischung wie vorstehend und in den Ansprüchen definiert erhalten wird, mit der die geschmacklich verbesserten Quarkprodukte erhalten werden. Solche Starterkulturen enthalten dann vorzugsweise
- etwa 20 bis etwa 30 Gew.-% *Streptococcus thermophilus,*
- etwa 5 bis etwa 15 Gew.-% *Leuconostoc species,*
- etwa 5 bis etwa 10 Gew.-% *Lactococcus lactis subsp. lactis biovar diacetylactis,*
- etwa 20 bis etwa 30 Gew.-% *Lactococcus lactis subsp. lactis,*
- etwa 20 bis etwa 30 Gew.-% *Lactococcus lactis subsp. cremoris,* und mit der Maßgabe, dass sich die Mengenangaben zu 100 Gew.-% ergänzen. Besonders bevorzugt sind Starterkulturen enthaltend
- 25 Gew.-% *Streptococcus thermophilus,*
- 12 Gew.-% *Leuconostoc species,*
- 13 Gew.-% *Lactococcus lactis subsp. lactis biovar diacetylactis,*
- 25 Gew.-% *Lactococcus lactis subsp. lactis,*
- 25 Gew.-% *Lactococcus lactis subsp. cremoris*

Alle genannten Mikroorganismen sind im Handel frei verfügbar.

Die Temperatur, bei der die Fermentation erfolgt, richtet sich nach dem Temperaturbereich, der für die jeweilig verwendeten Mikroorganismen optimal ist; typisch liegt die Temperatur im Bereich von etwa 18 bis etwa 35 °C und vorzugsweise bei etwa 30 °C.

Die fermentierten Milchprodukte können aufgrund unterschiedlicher Einflüsse im Produktionsverfahren mitunter Qualitätsschwankungen aufweisen. Die Auslöser wie z.B. Temperaturschwankungen, pH-Wert Änderungen, mechanische Erschütterungen und dergleichen lassen sich meist nicht vermeiden. Das Ergebnis ist eine rauhe Struktur ("Stippen"), Synärese, Viskositätsschwankungen und dergleichen. Um dies zu vermeiden wird in einer weiteren bevorzugten Ausführungsform der Erfindung Scherenergie in die fermentierte Masse eingetragen.

Dies kann beispielsweise durch ein Glattrühren im Tank geschehen, was mitunter zu einer Abnahme der Viskosität führt und daher nicht sonderlich bevorzugt ist. Häufig wird dabei auch Luft eingetragen, was zu Oxidationsprozessen und einem Fehlgeschmack führt.

Alternativ können auch so genannte Glattziehventile eingesetzt werden. Dabei wird zwar die Rauhigkeit im Produkt vermindert, aber auch hier kann es zu einer Abnahme der Viskosität kommen und außerdem besteht die Gefahr, dass insbesondere gegen Ende des Prozesses infolge von Druckschwankungen Stippen durchrutschen, die dann im Endprodukt zu finden sind. In einer weiteren Ausführungsform können auch Siebe eingesetzt werden, was jedoch vielfach zu Lasten der Cremigkeit geht. Außerdem sind Siebe schwer sauber zu halten.

Im Rahmen der vorliegenden Erfindung hat es sich daher als besonders vorteilhaft erwiesen, die Cremigkeit des Produktes weiter zu verbessern, indem man eine definierte Menge an Schwerenergie über mindestens einen Rotor-Stator Mischer einträgt; dieses Verfahren wird auch als "stretching" bezeichnet. Dabei kommen je nach Bedarf ein- bis dreistufige Systeme zum Einsatz. Durch Variation von Schlitzbreite, Anzahl und Geometrie der Zahnreihen, Anzahl der Rotor-Stator-Sätze, Verweilzeit und Drehzahl kann die jeweils gewünschte Viskosität und Cremigkeit eingestellt werden, wobei die Justierung dieser Parameter vom Fachmann auf der Grundlage seines allgemeinen Wissens vorgenommen werden kann, ohne dazu erfinderisch tätig werden zu müssen. Entsprechende Bauteile sind beispielsweise unter der Bezeichnung "Ytron-Z" (Ytron-Mischer) von der Ytron Process Technology GmbH im Handel erhältlich.

Die nach der Fermentation und gegebenenfalls nach dem Stretching erhaltene Quarkgrundmasse wird anschließend beispielsweise durch Zugabe von Sahne auf den gewünschten Gehalt an Trockenmasse und Proteinen eingestellt. Vorzugsweise liegt der Trockenmassengehalt bei etwa 15 bis etwa 20 Gew.-% und insbesondere bei etwa 18 Gew.-%. Der Proteingehalt kann etwa 10 bis etwa 15 Gew.-% und vorzugsweise etwa 12 Gew.-% betragen.

### Beispiele

### Beispiele 1 bis 4, Vergleichsbeispiele V1 bis V5

4 kg Magermilch wurden 6 min bei 88 °C behandelt und die enthaltenen Proteine denaturiert. Die Masse wurde mit unterschiedlichen Milchsäurebakterien und Lab versetzt, bei 30 °C etwa 18 h gereift und anschließend aufgerührt. Anschließend wurde das Fermentationsprodukt in eine Zentrifuge gegeben und ca. 3,2 kg Sauermolke als flüssiger Bestandteil abgetrennt. Die zurückgebliebene Quarkmasse (ca. 800 g) wurde durch Zugabe von Sahne auf eine Trockenmasse von 18 Gew.-% und einen Proteingehalt von 12 Gew.-% eingestellt. Beispiel 4 unterscheidet sich von Beispiel 2 dadurch, dass die Grundmasse zusätzlich nach der Fermentation in einem Rotor-Stator-Mischer der Firma YTRON verrührt ("gestrecht") wurde. Anschließend wurden die Produkte von einem Panel bestehend aus 5 erfahrenen Testern geschmacklich und sensorisch auf einer Skala von 1 (= trifft nicht zu) bis 6 (= trifft voll zu) beurteilt. Die Ergebnisse sind in **Tabelle 1** zusammengefasst. Die Beispiele 1 bis 4 sind erfindungsgemäß, die Beispiele V1 bis V5 dienen zum Vergleich. Angegeben sind die Mittelwerte der Beurteilungen.

**Tabelle 1**

| Geschmackliche und sensorische Beurteilung der Quarkgrundmassen | | | | | |
|---|---|---|---|---|---|
| **Bsp.** | **Starterkultur** | **Geschmack** | **Sensorik** | | |
| | | **Bitter** | **Cremig** | **Glatt** | **Schleimig** |
| V1 | *Bifido bakterium lactis B12* | 5,5 | 3,0 | 2,0 | 5,5 |
| V2 | *Lactobazillus acidophilus* | 5,0 | 3,5 | 2,0 | 5,5 |
| V3 | *Bifido bakterium lactis B12 + Lactobazillus acidophilus (1:1)* | 5,0 | 3,0 | 2,0 | 5,5 |
| V4 | Mischung (i) | 3,0 | 2,5 | 2,0 | 4,0 |
| V5 | Mischung (i) | 4,0 | 2,0 | 2,0 | 4,0 |
| 1 | Mischung (i+ii) = 75:25 | 2,0 | 4,0 | 3,5 | 2,0 |
| 2 | Mischung (i+ii) = 50:50 | 1,5 | 4,5 | 4,0 | 1,0 |
| 3 | Mischung (i+ii) = 25:75 | 2,5 | 4,0 | 3,5 | 1,5 |
| 4 | Mischung (i+ii) = 50:50 | 1,0 | 5,5 | 4,5 | 1,0 |

Die Versuche und Vergleichsversuche zeigen deutlich, dass die Auswahl der Starterkulturen einen erheblichen Einfluss auf die geschmacklichen und sensorischen Eigenschaften der Quarkgrundmasse hat. Die Quarkgrundmasse mit den besten Eigenschaften, d.h. der geringsten Bitterkeit, der höchsten Cremigkeit, die zudem keinen schleimigen Eindruck hinterlässt wurde mit einer erfindungsgemäßen Kombination der Kulturmischungen (i) und (ii) erhalten. Durch Behandlung im Ytron-Mischer wurden die sensorischen Werte nochmals verbessert.

### Beispiele 5 bis 7, Vergleichsbeispiele V6 bis V10

Die nachfolgenden Beispiele zeigen den Einfluss, den der gezielte Eintrag von Rührenergie in die fermentierten Quarkgrundmasse auf deren physikochemisches Verhalten hat. Beurteilt wurde, wie sich die Behandlung auf die Neigung der Quarkgrundmasse auswirkt, beim Zusatz von Fruchtzubereitungen Wasser aufzunehmen und so im Geschmack zu verwässern. Dazu wurden erfindungsgemäße Quarkgrundmassen, die auf der Basis von unterschiedlichen Starterkulturen hergestellt worden waren, einmal vor und einmal nach der Behandlung mit einem Rotor-Stator-Mischer der Firma YTRON (20°C, 15 min, 2.500 Upm) mit jeweils 25 Gew.-% einer gesüßten stückigen Fruchtzubereitung aus Erdbeeren und Ananas belegt und sowohl der optische als auch der geschmackliche Eindruck nach Lagerung der Zubereitungen über einen Zeitraum von 5 Stunden bei 7 °C durch ein Panel aus 5 erfahrenen Testern beurteilt.

Die optische Beurteilung erfolgte an Hand einer Skala von (1) = klare Trennung zwischen Quarkmasse und Fruchtzubereitung und (4) = Quarkmasse und Fruchtzubereitung vermischt; die geschmackliche Beurteilung erfolgte analog auf einer Skala von (1) = prägnanter Fruchtgeschmack bis (4) = Geschmack wässrig.

Die Ergebnisse sind in der nachfolgenden **Tabelle 2** zusammengefasst. Die Beispiele 5 bis 7 sind erfindungsgemäß, die Beispiele V6 bis V10 dienen zum Vergleich.

**Tabelle 2**

| Beurteilung der Quarkgrundmassen ohne bzw. mit Nachbehandlung mit einem Rotor-Stator-Mischer | | | | | |
|---|---|---|---|---|---|
| **Bsp.** | **Starterkultur** | **Optischer Eindruck** | | **Geschmacklicher Eindruck** | |
| | | **ohne** | **mit** | **ohne** | **mit** |
| V6 | *Bifido bakterium lactis B12* | 3,5 | 3,0 | 3,0 | 2,5 |
| V7 | *Lactobazillus acidophilus* | 3,5 | 3,0 | 3,0 | 3,0 |
| V8 | *Bifido bakterium lactis B12 + Lactobazillus acidophilus (1:1)* | 3,5 | 3,0 | 3,0 | 2,5 |
| V9 | Mischung (i) | 3,0 | 3,0 | 3,0 | 2,5 |
| V10 | Mischung (i) | 3,0 | 2,5 | 3,0 | 2,5 |
| 5 | Mischung (i+ii) = 75:25 | 2,0 | 1,0 | 2,0 | 1,0 |
| 6 | Mischung (i+ii) = 50:50 | 1,5 | 1,0 | 1,5 | 1,0 |
| 7 | Mischung (i+ii) = 25:75 | 2,0 | 1,0 | 2,0 | 1,0 |

Die Beispiele und Vergleichsbeispiele zeigen, dass durch die Nachbehandlung im Rotor-Stator-Mischer sowohl der optische als auch der geschmackliche Eindruck noch einmal durchgehend verbessert wird. Dabei führt der Einsatz der ausgewählten Kulturemischungen gegenüber dem Standardprodukt Bifidobakterium wiederum zu einem deutlich besseren Endprodukt.

## Patentansprüche

1. Quarkgrundmasse mit verbesserten Geschmackseigenschaften, dadurch erhältlich, dass man
(a) Rohmilch einer Temperaturbehandlung unterwirft und den Rahm abtrennt, so dass eine ungesäuerte Quarkgrundmasse entsteht,
(b) die so erhaltene Mischung einer Temperaturbehandlung unterwirft, bis Denaturierung eintritt,
(c) das denaturierte Produkt mit Starterkulturen und Lab versetzt und gegebenenfalls
(d) die nach Abschluss der Fermentation erhaltene Quarkgrundmasse auf einen definierten Trockenmassen- und Proteingehalt einstellt,
und als Starterkultur
(i) 25 bis 75 Gew.-% einer ersten Mischung von fünf Mikroorganismen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) 75 bis 25 Gew.-% einer zweiten Mischung von drei Mikroorganismen umfassend (ii-1) *Streptococcus thermophilus,* (ii-2) *Lactococcus lactis subsp. lactis* und (ii-3) *Lactococcus lactis subsp. Cremoris*
mit der Maßgabe, dass sich die Mengenangaben zu 100 Gew.-% ergänzen, und wobei in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind,
einsetzt.

2. Quarkgrundmasse nach Anspruch 1, **dadurch gekennzeichnet, dass** sie die Mischungen der Starterkulturen im Gewichtsverhältnis (i):(ii) von 40:60 bis 60:40 enthält.

3. Verzehrfertige Quarkzubereitung, enthaltend die Grundmasse nach Anspruch 1 sowie eine Auflage aus einer frischen Fruchtzubereitung.

4. Zubereitung nach Anspruch 3, **dadurch gekennzeichnet, dass** es sich bei der Fruchtzubereitung um ein Fruchtpüree oder Fruchtsalat handelt.

5. Verfahren zur Herstellung der Quarkgrundmasse nach Anspruch 1, bei dem man
(a) Rohmilch einer Temperaturbehandlung unterwirft und den Rahm abtrennt, so dass eine ungesäuerte Quarkgrundmasse entsteht,
(b) die so erhaltene Mischung einer Temperaturbehandlung unterwirft, bis Denaturierung eintritt,
(c) das denaturierte Produkt mit Starterkulturen und Lab versetzt und gegebenenfalls
(d) die nach Abschluss der Fermentation erhaltene Quarkgrundmasse auf einen definierten Trockenmassen- und Proteingehalt einstellt,
und als Starterkultur
(i) 25 bis 75 Gew.-% einer ersten Mischung von fünf Mikroorganismen umfassend (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* und (i-5) *Lactococcus lactis subsp. cremoris,* und
(ii) 75 bis 25 Gew.-% einer zweiten Mischung von drei Mikroorganismen umfassend (ii-1) *Streptococcus thermophilus,* (ii-2) *Lactococcus lactis subsp. lactis* und (ii-3) *Lactococcus lactis subsp. Cremoris*
mit der Maßgabe, dass sich die Mengenangaben zu 100 Gew.-% ergänzen, und wobei in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind,
einsetzt.

6. Verfahren nach Anspruch 5, **dadurch gekennzeichnet, dass** sie die Mischungen der Starterkulturen im Gewichtsverhältnis (i):(ii) von 40:60 bis 60:40 enthält.

7. Verfahren nach mindestens einem der Ansprüche 5 bis 6, **dadurch gekennzeichnet, dass** man die ungesäuerte Quarkgrundmasse über einen Zeitraum von 5 bis 10 min einer Temperaturbehandlung bei 85 bis 90 °C unterwirft und dabei denaturiert.

8. Verfahren nach mindestens einem der Ansprüche 5 bis 7, **dadurch gekennzeichnet, dass** man die so erhaltene denaturierte Masse bei 18 bis 35 °C mit Kulturen und Lab versetzt.

9. Verfahren nach mindestens einem der Ansprüche 5 bis 8, **dadurch gekennzeichnet, dass** man die Quarkgrundmasse einer Nachbehandlung unterwirft, bei der man Scherenergie einträgt.

10. Verfahren nach Anspruch 9, **dadurch gekennzeichnet, dass** man die Scherenergie über mindestens einen Rotor-Stator-Mischer einträgt.

## Claims

1. A quark base composition having enhanced taste properties, obtainable in that
(a) raw milk is subjected to a temperature treatment and the cream is separated off in such a manner that a non-acidified quark base mix is formed,
(b) the resultant mixture is subjected to a temperature treatment until denaturation occurs,
(c) the denatured product is admixed with starter cultures and rennet and optionally
(d) the quark base mix obtained after completion of fermentation is adjusted to a defined dry matter content and protein content,
and, as starter culture,
(i) 25 to 75% by weight of a first mixture of five microorganisms comprising (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* and (i-5) *Lactococcus lactis subsp. cremoris,* and
(ii) 75 to 25% by weight of a second mixture of three microorganisms comprising (ii-1) *Streptococcus thermophilus,* (ii-2) *Lactococcus lactis subsp. lactis* and (ii-3) *Lactococcus lactis subsp. Cremoris*
are used,
with the proviso that the amounts add up to 100% by weight, and wherein in the mixture (i) the five microorganisms are each present in amounts of 20 ± 5% by weight and in the mixture (ii) the three microorganisms are each present in amounts of 33 ± 5% by weight.

2. The quark base composition according to claim 1, containing the mixtures of the starter cultures in the weight ratio (i):(ii) of from 40:60 to 60:40.

3. A Ready-to-eat quark preparation containing the base mix according to claim 1 and also a topping made of a fresh fruit preparation.

4. The preparation according to claim 3, wherein said fruit preparation is a fruit puree or fruit salad.

5. A method for producing the composition of claim 1, comprising the following steps:
(a) subjecting raw milk to a temperature treatment and separating the cream off, in such a manner that a non-acidified quark base mix is formed;
(b) subjecting the resultant mixture to a temperature treatment until denaturation occurs,
(c) mixing the denatured product with starter cultures and rennet, and optionally
(d) adjusting the quark base mix obtained after completion of fermentation to a defined dry matter content and protein content,
and as starter culture,
(i) 25 to 75% by weight of a first mixture of five microorganisms comprising (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* and (i-5) *Lactococcus lactis subsp. cremoris,* and
(ii) 75 to 25% by weight of a second mixture of three microorganisms comprising (ii-1) *Streptococcus thermophilus,* (ii-2) *Lactococcus lactis subsp. lactis* and (ii-3) *Lactococcus lactis subsp. Cremoris*
are used,
with the proviso that the amounts add up to 100% by weight, and wherein in the mixture (i) the five microorganisms are each present in amounts of 20 ± 5% by weight and in the mixture (ii) the three microorganisms are each present in amounts of 33 ± 5% by weight.

6. A method according to claim 5, containing the mixtures of the starter cultures in the weight ratio (i):(ii) of from 40:60 to 60:40.

7. A method according to at least one of claims 5 to 6, wherein the non-acidified quark base mix is subjected to a temperature treatment of 85 to 90 °C over a period of 5 to 10 min and denatured in the course of this.

8. A method according to at least one of claims 5 to 7, wherein the thus obtained denatured mix is admixed with cultures and rennet at 18 to 35 °C.

9. A method according to at least one of claims 5 to 8, wherein wherein the quark base mix is subjected to an after-treatment in which shear energy is introduced.

10. A method according to claim 9, wherein the shear energy is introduced via at least one rotor-stator mixer

## Revendications

1. Masse de base de caillebotte à propriétés gustatives améliorées, pouvant être obtenue en ce que
(a) du lait brut est soumis à un traitement thermique et la crème est séparée, de manière à former une masse de base de caillebotte non acidifiée,
(b) le mélange ainsi obtenu est soumis à un traitement thermique jusqu'à ce qu'une dénaturation ait lieu,
(c) le produit dénaturé est mélangé avec des cultures de départ et de la présure, et éventuellement
(d) la masse de base de caillebotte obtenue après la fin de la fermentation est ajustée à une teneur en matière sèche et en protéines définie,
et, en tant que culture de départ,
(i) 25 à 75 % en poids d'un premier mélange de cinq microorganismes comprenant (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* et (i-5) *Lactococcus lactis subsp. cremoris,* et
(ii) 75 à 25 % en poids d'un deuxième mélange de trois microorganismes comprenant (ii-1) *Streptococcus thermophilus,* (ii-2) *Lactococcus lactis subsp. lactis* et (ii-3) *Lactococcus lactis subsp. cremoris,*
sont utilisés, à condition que la somme des indications de quantité soit de 100 % en poids, et, dans le mélange (i), les cinq microorganismes étant chacun contenus en quantités de 20 ± 5 % en poids et, dans le mélange (ii), les trois microorganismes étant chacun contenus en quantités de 33 ± 5 % en poids.

2. Masse de base de caillebotte selon la revendication 1, **caractérisée en ce qu'**elle contient les mélanges des cultures de départ en un rapport en poids (i):(ii) de 40:60 à 60:40.

3. Préparation à base de caillebotte prête à la consommation, contenant la masse de base selon la revendication 1, ainsi qu'une garniture en une préparation à base de fruits fraîche.

4. Préparation selon la revendication 3, **caractérisée en ce que** la préparation à base de fruits est une purée de fruits ou une salade de fruits.

5. Procédé de fabrication de la masse de base de caillebotte selon la revendication 1, selon lequel
(a) du lait brut est soumis à un traitement thermique et la crème est séparée, de manière à former une masse de base de caillebotte non acidifiée,
(b) le mélange ainsi obtenu est soumis à un traitement thermique jusqu'à ce qu'une dénaturation ait lieu,
(c) le produit dénaturé est mélangé avec des cultures de départ et de la présure, et éventuellement
(d) la masse de base de caillebotte obtenue après la fin de la fermentation est ajustée à une teneur en matière sèche et en protéines définie,
et, en tant que culture de départ,
(i) 25 à 75 % en poids d'un premier mélange de cinq microorganismes comprenant (i-1) *Streptococcus thermophilus,* (i-2) *Leuconostoc species,* (i-3) *Lactococcus lactis subsp. lactis biovar diacetylactis,* (i-4) *Lactococcus lactis subsp. lactis* et (i-5) *Lactococcus lactis subsp. cremoris,* et
(ii) 75 à 25 % en poids d'un deuxième mélange de trois microorganismes comprenant (ii-1) *Streptococcus thermophilus,* (ii-2) *Lactococcus lactis subsp. lactis* et (ii-3) *Lactococcus lactis subsp. cremoris,*
sont utilisés, à condition que la somme des indications de quantité soit de 100 % en poids, et, dans le mélange (i), les cinq microorganismes étant chacun contenus en quantités de 20 ± 5 % en poids et, dans le mélange (ii), les trois microorganismes étant chacun contenus en quantités de 33 ± 5 % en poids.

6. Procédé selon la revendication 5, **caractérisé en ce qu'**elle contient les mélanges des cultures de départ en un rapport en poids (i):(ii) de 40:60 à 60:40.

7. Procédé selon au moins l'une quelconque des revendications 5 à 6, **caractérisé en ce que** la masse de base de caillebotte non acidifiée est soumise à un traitement thermique de 85 à 90 °C pendant une durée de 5 à 10 minutes, et ainsi dénaturée.

8. Procédé selon au moins l'une quelconque des revendications 5 à 7, **caractérisé en ce que** la masse dénaturée ainsi obtenue est mélangée avec des cultures et de la présure à une température de 18 à 35 °C.

9. Procédé selon au moins l'une quelconque des revendications 5 à 8, **caractérisé en ce que** la masse de base de caillebotte est soumise à un traitement secondaire lors duquel un apport d'énergie de cisaillement a lieu.

10. Procédé selon la revendication 9, **caractérisé en ce que** l'énergie de cisaillement est apportée par au moins un mélangeur à rotor-stator.
